# EUROPEAN PATENT APPLICATION

(11) **EP 4 683 357 A1**
(43) Date of publication of application: **21.01.2026**
(21) Application number: 24777532.3
(22) Date of filing: 06.02.2024
(51) Int. Cl.: H04W 4/80

(54) **INTERNET OF THINGS COMMUNICATION METHOD AND DEVICE**

(30) Priority: 31.03.2023 CN 202310363392
(71) Applicant: Huawei Technologies Co., Ltd., Shenzhen, Guangdong 518129 (CN)
(72) Inventor: SUN, Bin, Shenzhen, Guangdong 518129 (CN); ZOU, Yanyuan, Shenzhen, Guangdong 518129 (CN)
(74) Representative: Epping - Hermann - Fischer
(86) International application number: PCT/CN2024/076298
(87) International publication number: WO 2024/198738

(57) **Abstract**

This application discloses an internet of things communication method and a device, to reduce operations and maintenance costs of internet of things devices and ensure safety of operations and maintenance personnel. The method may be applied to a main control CPU in an IoT device. The main control CPU may be connected to a Bluetooth chip, establish a Bluetooth connection with a terminal device by using the Bluetooth chip, establish a DTLS protocol-based encrypted data channel with the terminal device based on the Bluetooth connection, and then communicate user data over the encrypted data channel. In this way, even if the Bluetooth chip fails to establish an encrypted Bluetooth connection with the terminal device, transmitting the user data over the encrypted data channel ensures security of the user data. The encrypted data channel may be a TLS protocol-based encrypted data channel or the DTLS protocol-based encrypted data channel that is established through PSK negotiation.

## Description

This application claims priority to Chinese Patent Application No. 202310363392.7, filed with the China National Intellectual Property Administration on March 31, 2023 and entitled "INTERNET OF THINGS COMMUNICATION METHOD AND DEVICE", which is incorporated herein by reference in its entirety.

### TECHNICAL FIELD

This application relates to the field of communication technologies, and in particular, to an internet of things communication method and a device.

### BACKGROUND

In internet of things systems, there are a large quantity of internet of things (internet of things, IoT) devices with limited capabilities or limited resources. These IoT devices typically feature small data flows, low rates, low power consumption, and cost-effectiveness due to factors like low configuration or restricted power supply. Currently, operations and maintenance personnel generally employ serial port operations and maintenance methods to operate and maintain internet of things devices. For example, they connect cables between serial ports of personal computers and those on IoT devices, to communicate configuration data related to operations and maintenance.

However, as an increasing deployment of internet of things devices among enterprise users or individual users, operations and maintenance costs rise accordingly. In addition, for off-ground devices, using the serial port operations and maintenance method poses significant risks, making it less favorable for ensuring the safety of the operations and maintenance personnel.

### SUMMARY

This application provides an internet of things communication method and a device, to reduce operations and maintenance costs of internet of things devices and ensure safety of operations and maintenance personnel.

According to a first aspect, this application provides an internet of things communication method. The method may be applied to an apparatus. This application does not limit a type of the apparatus. For example, the apparatus may include a processor and a memory. When running instructions stored in the memory, the processor performs the method. This application does not limit performance of the apparatus. For example, the apparatus may be a low power consumption apparatus. The apparatus may be connected to a Bluetooth chip. This application does not limit a connection manner between the apparatus and the Bluetooth chip. For example, the apparatus and the Bluetooth chip may be connected through a serial port. The serial port is, for example, a universal asynchronous receiver/transmitter (universal asynchronous receiver/transmitter, UART). The apparatus and the Bluetooth chip may be disposed in a same device. For example, the apparatus and the Bluetooth chip are disposed in a same internet of things (internet of things, IoT) device. Optionally, the apparatus may include a main control processor of the IoT device.

The internet of things communication method is used for establishing a transmission channel between the apparatus and a terminal device, and communicating data in the transmission channel. The terminal device supports a Bluetooth transmission technology. This application does not limit a type of the terminal device. For example, the terminal device is a mobile smart terminal.

For ease of description, in this application, data communicated in a process of establishing the transmission channel is referred to as control data, and data communicated in the transmission channel is referred to as user data.

The process of establishing the transmission channel may include: establishing a Bluetooth connection with the terminal device by using the Bluetooth chip; and establishing a datagram transport layer security (datagram transport layer security, DTLS) protocol-based encrypted data channel with the terminal device based on the Bluetooth connection. A process of communicating the user data in the transmission channel may include: communicating the data with the terminal device through the encrypted data channel.

In the internet of things communication method, data communicated through the encrypted data channel may be referred to as user data. This application does not limit a type of the user data. For example, the user data may be the configuration data that is related to the operations and maintenance and that is mentioned in the background. In this way, operations and maintenance personnel may operate the terminal device to establish a Bluetooth connection with a Bluetooth chip of the IoT device and communicate the configuration data between the terminal device and the main control processor of the IoT device based on the Bluetooth connection, so that operations and maintenance costs of the operations and maintenance personnel for the IoT device are reduced, and safety of the operations and maintenance personnel is ensured.

In addition, in the foregoing method, the transmission channel includes not only the Bluetooth connection established by the Bluetooth chip, but also the encrypted data channel established by the apparatus with the terminal device based on the Bluetooth connection. For example, a payload (payload) of a Bluetooth message communicated between the Bluetooth chip and the terminal device may be encrypted user data. In this way, even if the Bluetooth chip cannot establish an encrypted Bluetooth connection with the terminal device, the encrypted data channel helps improve security of the user data.

Optionally, establishing the DTLS protocol-based encrypted data channel with the terminal device based on the Bluetooth connection is a process in which the apparatus negotiates a session (session) key of the encrypted data channel with the terminal device based on the Bluetooth connection. After the session key is determined through negotiation between the apparatus and the terminal device, the session key may be used to encrypt and communicate the user data on the Bluetooth connection.

That the apparatus and the terminal device communicate the data through the encrypted data channel includes: The apparatus sends the data to the terminal device through the encrypted data channel, and/or the apparatus receives the data from the terminal device through the encrypted data channel.

That the terminal device sends the data through the encrypted data channel may include: The terminal device encrypts the data based on the session key, to obtain first encrypted data and sends the first encrypted data to the apparatus through the Bluetooth connection; and the apparatus decrypts the first encrypted data based on the session key, to obtain the data. Similarly, that the apparatus sends data through the encrypted data channel may include: The apparatus encrypts the data based on the session key, to obtain second encrypted data and sends the second encrypted data to the terminal device through the Bluetooth connection; and then the terminal device decrypts the second encrypted data based on the session key, to obtain the data.

To ensure security of the session key, the establishing the datagram transport layer security DTLS protocol-based encrypted data channel with the terminal device based on the Bluetooth connection may include: negotiating configuration information of a pre-shared key (pre-shared key, PSK) with the terminal device based on the Bluetooth connection; and negotiating a session key of the encrypted data channel with the terminal device based on the configuration information of the PSK.

After the apparatus negotiates the configuration information of the pre-shared key PSK with the terminal device based on the Bluetooth connection, it may be considered that a trust relationship is established between the apparatus and the terminal device based on the configuration information of the PSK. In other words, the two parties set configuration information used for verifying the trust relationship. Then, the apparatus may negotiate, based on the configuration information of the PSK, the session key of the encrypted data channel with a device having the trust relationship (a trusted device for short).

The configuration information of the PSK may include a PSK-pair. The PSK-pair may include a PSK and a pre-shared key identifier (pre-shared key identifier, PSK-ID). This application does not limit a specific implementation process of negotiating the session key of the encrypted data channel with the terminal device based on the configuration information of the PSK. For example, for the process, refer to a cipher suite related to the PSK in a DTLS protocol for understanding. For example, based on the configuration information that is stored, the apparatus may verify whether the terminal device is a trusted device, and the terminal device may verify whether the apparatus is a trusted device. If the two parties succeed in the verification, the two parties may generate the session key of the encrypted data channel based on the stored PSK. If one party or the two parties fail to succeed in the verification, the two parties may terminate the procedure of establishing the encrypted data channel.

Optionally, the terminal device may obtain a pre-shared key pair PSK-pair input by a user, and then send the configuration information of the PSK to the apparatus based on the PSK-pair. Correspondingly, the negotiating the configuration information of the PSK with the terminal device based on the Bluetooth connection includes: receiving and storing, through the Bluetooth connection, the configuration information sent by the terminal device. Compared with a manner in which the configuration information of the PSK is pre-stored in the apparatus before delivery, a manner in which the user sends the configuration information of the PSK to the apparatus through the terminal device can simplify a user operation because the user does not need to memorize factory settings.

To prevent the configuration information of the PSK from being eavesdropped, before the terminal device and the apparatus complete establishment of the channel or complete establishment of the trust relationship, the apparatus may control the Bluetooth chip to transmit a Bluetooth signal at a low transmit power. To facilitate data exchange between the terminal device used by the user and the apparatus, after the terminal device and the apparatus complete establishment of the channel or establishment of the trust relationship, the apparatus may control the Bluetooth chip to transmit a Bluetooth signal at a high transmit power.

For example, the method may further include: controlling, based on that the configuration information of the PSK is not stored, the Bluetooth chip to transmit a Bluetooth signal at a first transmit power; and controlling, based on that the configuration information of the PSK is stored, the Bluetooth chip to transmit a Bluetooth signal at a second transmit power, where the first transmit power is less than the second transmit power.

This application does not limit a type of the user data. In some examples, user data sent by the terminal device to the apparatus may be a request sent by a client to a serving end, and user data sent by the apparatus to the terminal device may be a response sent by the serving end for the request.

It is assumed that the apparatus is configured to provide one or more services (referred to as target services) for the terminal device. It may be considered that the apparatus is a serving end, and the terminal device is a client. The user data may be data that is related to the target service and that is exchanged between the serving end and the client. Alternatively, the user data is data (referred to as management data) exchanged between the client and the serving end in a process in which the user manages the serving end through the client. For example, the management data may include at least one of configuration data, status data, remote procedure call (remote procedure call, RPC) data, notification (Notification) data, and the like that are exchanged between the client and the serving end. In some examples, the apparatus and the terminal device support a network configuration protocol NETCONF and are respectively a serving end and a client for the protocol. The user data is data exchanged between the client and the serving end for the NETCONF protocol.

Optionally, the user data is model-based data described by using a target modeling language. For example, the target modeling language is used for a complete description of data between the client and the serving end that support the NETCONF protocol. Optionally, the target modeling language is a next generation modeling language YANG model or a thing model.

The Bluetooth chip may be a Bluetooth low energy (Bluetooth low energy, BLE) chip. The BLE chip has an advantage of low power consumption, but a maximum payload size of a BLE message is small, for example, is generally 244 bytes (Bytes). However, data output by the target modeling language is generally a large file, for example, a Javascript object notation (JavaScript Object Notation, JSON) file (also referred to as JSON data) or an extensible markup language (extensible markup language, XML) file (also referred to as XML data), whose size is far greater than the maximum payload size of the Bluetooth message.

To facilitate reception of the data sent by the terminal device by the Bluetooth chip, after obtaining the first encrypted data through encryption, the terminal device may fragment the first encrypted data to obtain a plurality of first data blocks and separately send the plurality of first data blocks through the Bluetooth connection. Correspondingly, that the apparatus receives, through the encrypted data channel, the data sent by the terminal device may include: The apparatus separately receives, by using the Bluetooth chip, the plurality of first data blocks sent by the terminal device; assembles the plurality of first data blocks to obtain the first encrypted data; and decrypts the first encrypted data by using the session key of the encrypted data channel, to obtain the data.

To facilitate sending of data to the terminal device by the Bluetooth chip, sending the data to the terminal device through the encrypted data channel includes: encrypting the data by using the session key of the encrypted data channel, to obtain second encrypted data; fragmenting the second encrypted data to obtain a plurality of second data blocks; and separately sending the plurality of second data blocks by using the Bluetooth chip. Correspondingly, the terminal device may separately receive the plurality of second data blocks through the Bluetooth connection; assemble the plurality of second data blocks to obtain the second encrypted data; and decrypt the second encrypted data by using the session key of the encrypted data channel, to obtain the data.

In some examples, flow data (for example, UART data) is communicated between the apparatus and the Bluetooth chip through a serial port. Because the Bluetooth chip cannot control a time interval at which the plurality of first data blocks arrive at the Bluetooth chip, to optimize transmission performance (for example, reduce a transmission delay) between the Bluetooth chip and the apparatus, the Bluetooth chip may continuously send the plurality of first data blocks through the serial port. In this case, the first flow data received by the apparatus through the serial port may include flow data corresponding to the plurality of first data blocks. The apparatus may disassemble the first flow data into the plurality of first data blocks, then assemble the plurality of first data blocks to obtain the first encrypted data, and decrypt the first encrypted data by using the session key of the encrypted data channel, to obtain the data.

To facilitate disassembling the first flow data by the apparatus to obtain the plurality of first data blocks, the Bluetooth chip may add, to the first data block, a frame header (referred to as a frame header of framing) indicating the apparatus to determine a corresponding data block from the first flow data, and the apparatus may disassemble the first flow data based on the frame header of the framing of the first data block, to obtain the plurality of first data blocks. Optionally, if the apparatus sends the plurality of second data blocks to the Bluetooth chip through the serial port, to optimize transmission performance (for example, reduce a transmission delay) between the Bluetooth chip and the apparatus, the apparatus may combine the plurality of second data blocks into second flow data, and send the second flow data to the Bluetooth chip through the serial port.

To facilitate disassembling the second flow data by the Bluetooth chip to obtain the plurality of second data blocks, the apparatus may add, to the second data block, a frame header (referred to as a frame header of framing) indicating the Bluetooth chip to determine a corresponding data block from the second flow data, and the apparatus may disassemble the second flow data based on the frame header of the framing of the second data block, to obtain the plurality of second data blocks.

Optionally, to improve reliability of data transmission in the encrypted data channel, after sending the data to the terminal device through the encrypted data channel, the method further includes: repeatedly sending the data to the terminal device through the encrypted data channel.

According to a second aspect, this application provides an internet of things communication method, applied to a communication system. The communication system includes a first terminal device and a second terminal device. The second terminal device includes an apparatus and a Bluetooth chip, and the apparatus is connected to the Bluetooth chip. The method includes: The apparatus establishes a Bluetooth connection with the first terminal device by using the Bluetooth chip; the apparatus establishes a DTLS protocol-based encrypted data channel with the first terminal device based on the Bluetooth connection; and the first terminal device communicates data with the apparatus through the encrypted data channel.

In some examples, the communication system is an IoT system, and the second terminal device may be an IoT device. In some examples, for operations performed by the first terminal, refer to operations performed by the terminal device mentioned in any one of the first aspect or the possible implementations of the first aspect for understanding. For operations performed by the apparatus, refer to operations performed by the apparatus mentioned in any one of the first aspect or the possible implementations of the first aspect for understanding. For operations performed by the Bluetooth chip, refer to operations performed by the Bluetooth chip mentioned in any one of the first aspect or the possible implementations of the first aspect for understanding.

According to a third aspect, this application provides an apparatus. The apparatus includes a connection module and a transmission module. The connection module is configured to establish a Bluetooth connection with a terminal device by using a Bluetooth chip. The connection module is further configured to establish a datagram transport layer security DTLS protocol-based encrypted data channel with the terminal device based on the Bluetooth connection. The transmission module is configured to communicate data to the terminal device through the encrypted data channel. Optionally, the connection module is specifically configured to: negotiate configuration information of a pre-shared key PSK with the terminal device based on the Bluetooth connection; and negotiate a session key of the encrypted data channel with the terminal device based on the configuration information of the PSK.

Optionally, the connection module is specifically configured to receive and store the configuration information from the terminal device over the Bluetooth connection, where the configuration information is obtained by the terminal device from a user.

Optionally, the connection module is further configured to: control, based on that the configuration information is not stored, the Bluetooth chip to transmit a Bluetooth signal at a first transmit power; and control, based on that the configuration information is stored, the Bluetooth chip to transmit a Bluetooth signal at a second transmit power, where the first transmit power is less than the second transmit power.

Optionally, the data is data obtained through description by using a next generation modeling language YANG model or a thing model.

Optionally, the transmission module is specifically configured to: receive first flow data from the Bluetooth chip through a serial port, where the first flow data is sent by the Bluetooth chip to the serial port upon reception of a plurality of first data blocks sent by the terminal device; disassemble the first flow data into the plurality of first data blocks; assemble the plurality of first data blocks to obtain first encrypted data; and decrypt the first encrypted data by using the session key of the encrypted data channel, to obtain the data.

Optionally, the transmission module is specifically configured to: encrypt the data by using the session key of the encrypted data channel, to obtain second encrypted data; fragment the second encrypted data to obtain a plurality of second data blocks; combine the plurality of second data blocks into second flow data; and send the second flow data to the Bluetooth chip through the serial port.

Optionally, the apparatus and the Bluetooth chip are disposed in a same IoT device, and the apparatus is connected to the Bluetooth chip.

According to a fourth aspect, this application provides an apparatus, including a processor and a memory. When running instructions stored in the memory, the processor performs the method according to any one of the first aspect or the possible implementations of the first aspect.

According to a fifth aspect, this application provides a device. The device includes a Bluetooth chip and the apparatus provided in the third aspect or the fourth aspect, and the Bluetooth chip is connected to the apparatus.

According to a sixth aspect, this application provides a system, including a terminal device and the device according to the fifth aspect.

Optionally, the system may be an internet of things system.

According to a seventh aspect, this application provides a computer-readable storage medium, including instructions. When the instructions run on a computer, the computer is enabled to perform the method according to any one of the first aspect or the possible implementations of the first aspect.

The apparatus examples provided in this application may be configured to perform the foregoing corresponding method examples. Therefore, for technical effects that can be achieved by the apparatus examples in this application, refer to the technical effects achieved by the foregoing corresponding method examples. Details are not described herein again.

### BRIEF DESCRIPTION OF DRAWINGS

FIG. 1 schematically shows a communication system according to this application;
FIG. 2 schematically shows a possible structure of an IoT device and an internet of things communication method according to this application;
FIG. 3 schematically shows a process of establishing a transmission channel between a mobile phone and a main control CPU of an IoT device;
FIG. 4-1 schematically shows a YANG model in an IoT device or a smart terminal;
FIG. 4-2 to FIG. 4-4 each schematically show user data output by a YANG model;
FIG. 5 schematically shows a process of communicating user data between a mobile phone and a main control CPU of an IoT device;
FIG. 6 schematically shows a possible structure of a computing device according to this application; and
FIG. 7 schematically shows a possible structure of an apparatus according to this application.

### DESCRIPTION OF EMBODIMENTS

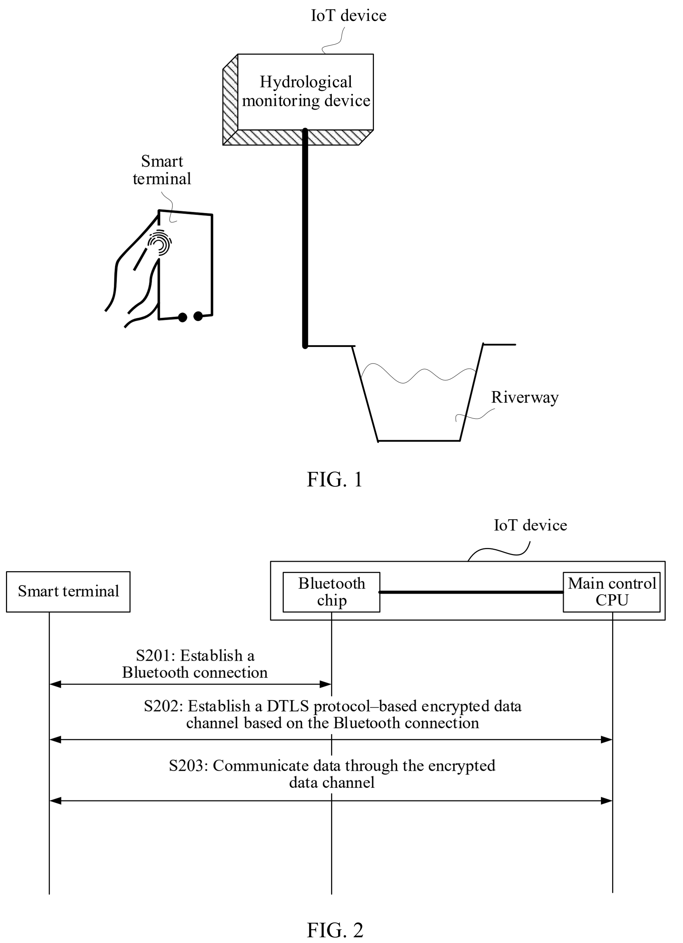

This application provides a communication system. With reference to FIG. 1, the communication system may be an IoT system, and the IoT system may include but is not limited to a smart terminal and an IoT device. In FIG. 1, an example in which the communication system includes one smart terminal and one IoT device is used. Optionally, the communication system may include more devices. For example, the communication system includes a plurality of smart terminals, includes more IoT devices, or includes a plurality of smart terminals and a plurality of IoT devices. The IoT device may be a dumb terminal or a thin terminal. Compared with a smart terminal, the dumb terminal has lower configuration, limited resources, and weaker security protection, and fall under a category of a resource-limited device.

In FIG. 1, an example in which a first terminal device and a second terminal device are respectively a mobile phone and a hydrological monitoring device is used. The first terminal device may alternatively be a handheld smart terminal, for example, a notebook computer, a tablet computer, a smartwatch, or smart glasses, or another type of smart terminal device, for example, an in-vehicle terminal (for example, an in-vehicle infotainment system or an in-vehicle computer). The second terminal device may alternatively be a dumb terminal (for example, a wireless printer and/or a camera) in an enterprise office area, a dumb terminal (for example, an automatic guide vehicle) in a logistics warehouse area, a dumb terminal (for example, a direct digital control controller) in a smart building area, or a dumb terminal (for example, a medical device, for example, an infusion pump) in a medical place, or another type of IoT device.

The smart terminal mentioned in this application may be replaced with the first terminal device. This application does not limit a type of the first terminal device. Similarly, the IoT device provided in this application may be replaced with the second terminal device. This application does not limit a type of the second terminal device. Correspondingly, the communication system shown in FIG. 1 may be a communication system other than the IoT system.

In FIG. 1 and the following, an example in which the first terminal device and the second terminal device are respectively a smart terminal and an IoT device is used for description.

A transmission channel may be established between the smart terminal and the IoT device, and data is communicated on the transmission channel. For ease of description, in this application, data communicated in a process of establishing the transmission channel is referred to as control data, and data communicated in the transmission channel is referred to as user data.

This application does not limit a type of the user data. It is assumed that the IoT device is configured to provide one or more services (referred to as target services) for the smart terminal. It may be considered that the IoT device is a serving end, and the smart terminal is a client. The user data may be target service related data (also referred to as service data) exchanged between the serving end and the client. Alternatively, the user data is user data (also referred to as management data) exchanged between the client and the serving end in a process in which a user manages the serving end through the client. The management data may include at least one of configuration data, status data, remote procedure call (remote procedure call, RPC) data, notification (Notification) data, and the like that are exchanged between the client and the serving end. The configuration data includes but is not limited to upgrade, installation, uninstallation, and the like of a software application. In some examples, the smart terminal and the IoT device support a network configuration (network configuration, NETCONF) protocol, and are respectively a client and a serving end for the protocol.

The transmission channel may be established between the smart terminal and the IoT device through a serial port. However, as an increasing deployment of internet of things devices among enterprise users or individual users, operations and maintenance costs rise accordingly. In addition, for off-ground devices, using the serial port operations and maintenance method poses significant risks, making it less favorable for ensuring the safety of operations and maintenance personnel.

To improve operations and maintenance efficiency and ensure the safety of the operations and maintenance personnel, the smart terminal can communicate with the IoT device via a server. However, the additional hardware deployment increases costs of the communication system. In addition, IoT devices are typically deployed in remote areas with weak signals or in harsh environments, making it challenging to establish a stable communication connection with servers.

The smart terminal generally has a Bluetooth transmission capability. To establish an end-to-end transmission channel (also referred to as a P2P connection) between the smart terminal and the IoT device, a Bluetooth chip may be disposed in the IoT device. The Bluetooth chip may be a Bluetooth low energy (Bluetooth low energy, BLE) chip. This helps reduce power consumption of the IoT device.

FIG. 2 schematically shows a possible structure of an IoT device. With reference to FIG. 2, the IoT device includes but is not limited to a main control central processing unit (central processing unit, CPU) and a Bluetooth chip. The main control CPU is connected to the Bluetooth chip through a serial port. In FIG. 2, a bold line segment represents a serial port connection line. This application does not limit a type of the serial port. For example, the serial port is a universal asynchronous receiver/transmitter (universal asynchronous receiver/transmitter, UART).

Based on the structure of the IoT device shown in FIG. 2, this application provides an internet of things communication method. An idea of the method is as follows: A transmission channel established between the IoT device and a smart terminal is an encrypted communication channel established based on a Bluetooth connection between the main control CPU and the smart terminal, and user data is communicated between the main control CPU and the smart terminal through the encrypted communication channel, to improve security of the user data.

It should be noted that the IoT device shown in FIG. 2 may be replaced with another terminal device, and the main control CPU shown in FIG. 2 may be replaced with any apparatus that can perform the internet of things communication method. This application does not limit a type of the apparatus. For example, the apparatus may include a processor and a memory. When running instructions stored in the memory, the processor performs the foregoing method. The following describes a structure of the apparatus by using an example, and details are not described herein. In FIG. 2, an example in which the main control CPU is connected to the Bluetooth chip through a serial port is used. This application does not limit a connection manner between the main control CPU and the Bluetooth chip. For example, the main control CPU and the Bluetooth chip may be connected through a bus. The following describes the internet of things communication method by using an example in which the apparatus is the main control CPU, and the apparatus is connected to the Bluetooth chip through the serial port.

Still with reference to FIG. 2, the internet of things communication method may include steps S201 to S203.

S201: The main control CPU establishes the Bluetooth connection with the smart terminal by using the Bluetooth chip. This application does not limit a manner in which the main control CPU establishes the Bluetooth connection with the smart terminal by using the Bluetooth chip. For example, the Bluetooth chip may broadcast Bluetooth information, and the smart terminal obtains the Bluetooth chip through scanning based on the Bluetooth information, and then performs pairing with the Bluetooth chip to establish the Bluetooth connection.

This application does not limit a manner of pairing the smart terminal and the Bluetooth chip. For example, the smart terminal and the Bluetooth chip may be paired in a manner such as numeric comparison (numeric comparison), passkey entry (passkey entry), or just works (just work).

S202: The main control CPU establishes a DTLS protocol-based encrypted data channel with the smart terminal based on the Bluetooth connection.

After the main control CPU establishes the Bluetooth connection with the smart terminal by using the Bluetooth chip, the main control CPU establishes the DTLS protocol-based encrypted data channel with the smart terminal based on the Bluetooth connection.

Establishing the DTLS protocol-based encrypted data channel with the terminal device based on the Bluetooth connection is a process in which the apparatus negotiates a session (session) key of the encrypted data channel with the terminal device based on the Bluetooth connection.

For a process of establishing the DTLS protocol-based encrypted data channel between the main control CPU and the smart terminal based on a specific protocol, refer to related content of a DTLS protocol. The following describes the process with reference to a method example, and details are not described herein.

S203: The smart terminal communicates data with the terminal device through the encrypted data channel.

For ease of description, in this application, data sent by the smart terminal to the main control CPU through the encrypted data channel is referred to as first data. Correspondingly, the main control CPU may receive the first data through the encrypted data channel. In this application, data sent by the main control CPU to the smart terminal through the encrypted data channel is referred to as second data. Correspondingly, the smart terminal may receive the second data through the encrypted data channel.

S201 and S202 may be understood as a process of establishing a transmission channel between the main control CPU and the smart terminal, and S203 may be understood as a process of communicating the user data between the main control CPU and the smart terminal. After S202, the main control CPU negotiates with the smart terminal to determine a session key, and then may use the session key to encrypt and communicate the user data on the Bluetooth connection. For example, that the smart terminal sends the first data through the encrypted data channel may include: The smart terminal encrypts the first data based on the session key, to obtain first encrypted data, and sends the first encrypted data to the main control CPU through the Bluetooth connection; and the main control CPU decrypts the first encrypted data based on the session key, to obtain the first data.

Similarly, that the main control CPU sends the second data through the encrypted data channel may include: The main control CPU encrypts the second data based on the session key, to obtain second encrypted data, and sends the second encrypted data to the smart terminal through the Bluetooth connection; and then, the smart terminal decrypts the second encrypted data based on the session key, to obtain the second data.

In the internet of things communication method shown in FIG. 2, the first data and the second data may be user data. Operations and maintenance personnel may operate the smart terminal to establish the Bluetooth connection with the Bluetooth chip of the IoT device, and the smart terminal and the IoT device communicate the user data based on the Bluetooth connection, so that operations and maintenance costs of the operations and maintenance personnel for the IoT device are reduced, and safety of the operations and maintenance personnel is ensured.

In addition, in the foregoing method, the transmission channel includes not only the Bluetooth connection established by the Bluetooth chip, but also the encrypted data channel established by the main control CPU and the smart terminal on the Bluetooth connection. For example, a payload (payload) of a Bluetooth message communicated between the Bluetooth chip and the smart terminal may be encrypted user data. In this way, even if the Bluetooth chip cannot establish an encrypted Bluetooth connection with the smart terminal, the encrypted data channel helps improve security of the user data.

For ease of description, in this application, data exchanged in a process of establishing the DTLS protocol-based encrypted data channel between the main control CPU and the smart terminal is referred to as channel establishment data. To ensure security of the channel establishment data communicated on the Bluetooth connection, the establishing the datagram transport layer security DTLS protocol-based encrypted data channel with the smart terminal based on the Bluetooth connection may include: negotiating configuration information of a pre-shared key (pre-shared key, PSK) with the smart terminal based on the Bluetooth connection; and negotiating a session key of the encrypted data channel with the smart terminal based on the configuration information of the PSK.

After the main control CPU negotiates the configuration information of the pre-shared key PSK with the smart terminal based on the Bluetooth connection, it may be considered that a trust relationship is established between the main control CPU and the smart terminal based on the configuration information of the PSK. Then, the main control CPU may negotiate, based on the configuration information of the PSK, the session key of the encrypted data channel with a device having the trust relationship (a trusted device for short).

Compared with the Bluetooth chip that uses a personal identification number (personal identification number, PIN), the PSK does not depend on a subscriber identification module (subscriber identification module, SIM) card in the device, to facilitate exchange of the user data with the main control CPU through another smart terminal replaced by a user.

The configuration information of the PSK may include a PSK-pair. The PSK-pair may include a PSK and a pre-shared key identifier (pre-shared key identifier, PSK-ID). This application does not limit a specific implementation process of negotiating the session key of the encrypted data channel with the smart terminal based on the configuration information of the PSK. For example, for the process, refer to a cipher suite related to the PSK in the DTLS protocol for understanding. For example, based on the configuration information that is stored, the main control CPU may verify whether the smart terminal is a trusted device, and the smart terminal may verify whether the main control CPU is a trusted device. If the two parties succeed in the verification, the two parties may generate the session key of the encrypted data channel based on the stored PSK. If one party or the two parties fail to succeed in the verification, the two parties may terminate the procedure of establishing the encrypted data channel. The following describes the process with reference to a method example, and details are not described herein.

Optionally, the smart terminal may obtain a pre-shared key pair PSK-pair input by the user, and then send the configuration information of the PSK to the main control CPU based on the PSK-pair. Correspondingly, negotiating the configuration information of the PSK with the smart terminal based on the Bluetooth connection includes:
receiving and storing, through the Bluetooth connection, the configuration information sent by the smart terminal. The following describes the process with reference to a method example, and details are not described herein.

Compared with a manner in which the configuration information of the PSK is pre-stored in the main control CPU before delivery, a manner in which the user sends the configuration information of the PSK to the main control CPU through the smart terminal can simplify a user operation because the user does not need to memorize factory settings.

To prevent the configuration information of the PSK from being eavesdropped, before the smart terminal negotiates with the main control CPU to determine the configuration information of the PSK, the main control CPU may control the Bluetooth chip to transmit a Bluetooth signal at a low transmit power. To facilitate data exchange between the smart terminal used by the user and the main control CPU, after the smart terminal completes establishment of the channel or establishment of the trust relationship with the main control CPU, the main control CPU may control the Bluetooth chip to transmit a Bluetooth signal at a high transmit power.

For example, the method may further include: The main control CPU may control, based on that the main control CPU does not store the configuration information of the PSK, the Bluetooth chip to transmit a Bluetooth signal at a first transmit power; and the main control CPU may control, based on that the main control CPU stores the configuration information of the PSK, the Bluetooth chip to transmit a Bluetooth signal at a second transmit power. The first transmit power is less than the second transmit power.

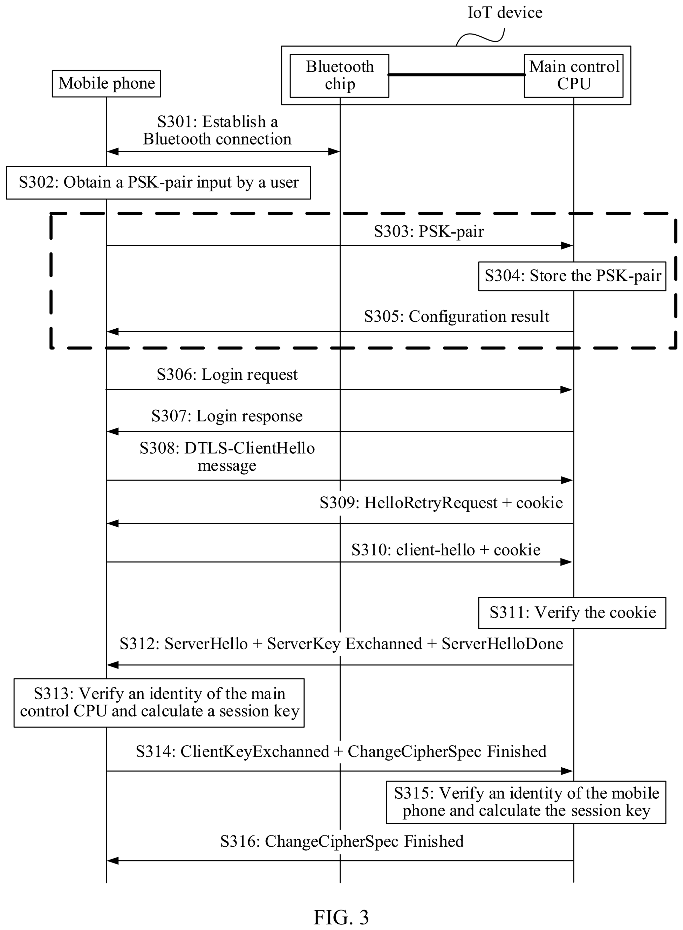

FIG. 3 schematically shows, by using an example in which a smart terminal is a mobile phone, a process of establishing a transmission channel between the smart terminal and a main control CPU. With reference to FIG. 3, the process of establishing the transmission channel may include steps S301 to S316.

S301: The smart terminal establishes a Bluetooth connection with a Bluetooth chip.

S302: The mobile phone obtains a PSK-pair input by a user.

The mobile phone may output a first interface to the user, and the user may input the PSK-pair on the first interface. If the smart terminal has not negotiated with the main control CPU to determine configuration information of a PSK, after S302, S303 to S307 may be performed in sequence. In addition, to ensure security of the configuration information of the PSK, before S305, a transmit power of the Bluetooth chip may be the first transmit power described above.

If the smart terminal has negotiated with the main control CPU to determine the configuration information of the PSK, after S302, S306 and S307 may be performed in sequence. In addition, optionally, the transmit power of the Bluetooth chip may be the second transmit power described above. If the user inputs incorrect PSK-pairs for a plurality of times on the first interface, an IoT device may be locked. The user can log in to the IoT device again only after a period of time.

S303: The mobile phone sends the PSK-pair to the main control CPU through the Bluetooth connection.

S304: The main control CPU stores the PSK-pair.

S305: The main control CPU sends a configuration result to the mobile phone through the Bluetooth connection. The configuration result may indicate that the main control CPU successfully receives the PSK-pair.

S306: The mobile phone sends a login request to the main control CPU through the Bluetooth connection.

The login request is used for requesting to start establishment of an encrypted data channel (or a session channel). S307: The main control CPU sends a login response to the mobile phone through the Bluetooth connection.

After receiving the login request, the main control CPU may respond to the login request, for example, send the login response of the login request to the mobile phone. The login response may indicate that starting establishment of the encrypted data channel is agreed or establishment of the encrypted data channel is rejected. If the login response indicates that starting establishment of the encrypted data channel is agreed, the process may further include S308 to S316.

S308: The mobile phone sends a client-hello message to the main control CPU.

The client-hello message is used for initiating a session.

S309: The main control CPU sends HelloRetryRequest + cookie to the mobile phone.

After receiving the client-hello message, the main control CPU responds to HelloRetryRequest + cookie. HelloRetryRequest + cookie is used for responding to a session initiation request and initiating cookie verification. S310: The mobile phone sends client-hello + cookie to the main control CPU.

An APP of the mobile phone sends client-hello + cookie to respond to the cookie verification.

S311: The main control CPU verifies the cookie.

For example, the main control CPU may verify whether cookies respectively communicated in S309 and S310 are consistent. If the verification succeeds, S312 is triggered; or if the verification fails, establishment of the encrypted data channel is rejected.

S312: The main control CPU sends ServerHello + ServerKeyExchanned + ServerHelloDone to the mobile phone. ServerKeyExchanned may carry a PSK-ID.

S313: The mobile phone verifies an identity of the main control CPU and calculates a session key.

The mobile phone may verify ServerKeyExchanned, for example, verify whether the PSK-ID in ServerKeyExchanned is consistent with a stored PSK-ID. If the PSK-ID in ServerKeyExchanned is consistent with the stored PSK-ID, the verification succeeds, and the session key is calculated based on the stored PSK. If the PSK-ID in ServerKeyExchanned is inconsistent with the stored PSK-ID, the establishment of the encrypted data channel is rejected.

S314: The mobile phone sends ClientKeyExchanned + ChangeCipherSpec Finished to the main control CPU. ClientKeyExchanned may carry the PSK-ID.

S315: The main control CPU verifies the identity of the mobile phone and calculates the session key.

The main control CPU may verify ClientKeyExchanned, for example, verify whether the PSK-ID in ClientKeyExchanned is consistent with the stored PSK-ID. If the PSK-ID in ClientKeyExchanned is consistent with the stored PSK-ID, the verification succeeds, and the session key is calculated based on the stored PSK. If the PSK-ID in ClientKeyExchanned is inconsistent with the stored PSK-ID, the establishment of the encrypted data channel is rejected. The session key is calculated based on the PSK.

S316: The main control CPU sends ChangeCipherSpec Finished to the mobile phone.

The main control CPU successfully establishes a session/an encrypted data channel with the mobile phone.

For the messages in S308 to S316, refer to a cipher suite related to the PSK in a DTLS protocol for understanding.

With reference to FIG. 3, data sent by the mobile phone to the main control CPU through the Bluetooth connection passes through the Bluetooth chip and a serial port in sequence and arrives at the main control CPU. Data sent by the main control CPU to the mobile phone through the Bluetooth connection passes through the serial port and the Bluetooth chip in sequence and arrives at the mobile phone.

After the main control CPU and the mobile phone successfully establish the DTLS protocol-based encrypted data channel, the mobile phone may output a management interface for the IoT device to the user. The user may input an operations and maintenance instruction on the interface, and the mobile phone sends the operations and maintenance instruction to the IoT device through the encrypted data channel. After receiving the operations and maintenance instruction, the IoT device may determine whether an access permission to the instruction is consistent with a permission of the currently logged-in user. If the access permission to the instruction is consistent with the permission of the currently logged-in user, the IoT device may respond with a reply message. If the access permission to the instruction is inconsistent with the permission of the currently logged-in user (for example, there is no sufficient permission), the IoT device may reply that there is no sufficient permission. This helps ensure security of user data. After the main control CPU and mobile phone successfully establish the DTLS protocol-based encrypted data channel, the IoT device may disable an open BLE operations and maintenance interface if the IoT device detects that a BLE air interface is offline. After the main control CPU and mobile phone successfully establish the encrypted data channel, the IoT device may disable the open BLE operations and maintenance interface if the IoT device detects that the mobile phone has no operations and maintenance messages exchanged with the IoT device for a long period of time. That the BLE operations and maintenance interface is disabled may mean that S301 or S302 is performed.

After the smart terminal negotiates with the main control CPU to determine the configuration information of the PSK, the user may hold another smart terminal and the main control CPU to perform S302, S306, S307, and S308 to S316 in sequence, to establish an encrypted data channel with the main control CPU, so as to operate and maintain the IoT device.

The foregoing describes, by using an example, the process of establishing the encrypted data channel. The following describes a process of communicating first user data and/or second data in the encrypted data channel.

This application does not limit a type of the user data. In some examples, the user data may be target service-related data exchanged between a serving end and a client, or data (referred to as management data) exchanged between the client and the serving end in a process in which the user manages the serving end by using the client. For example, the management data may include at least one of configuration data, status data, remote procedure call (remote procedure call, RPC) data, notification (Notification) data, and the like that are exchanged between the client and the serving end. In some examples, the main control CPU and the smart terminal support a network configuration protocol NETCONF and are respectively a serving end and a client for the protocol. The user data is data exchanged between the client and the serving end for the NETCONF protocol.

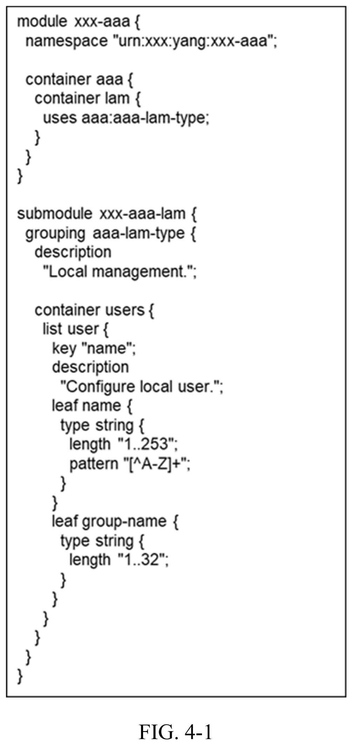

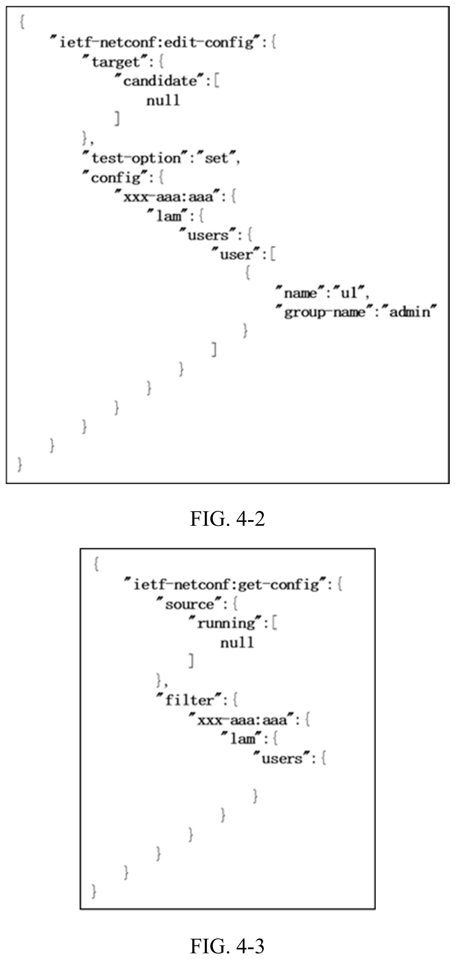

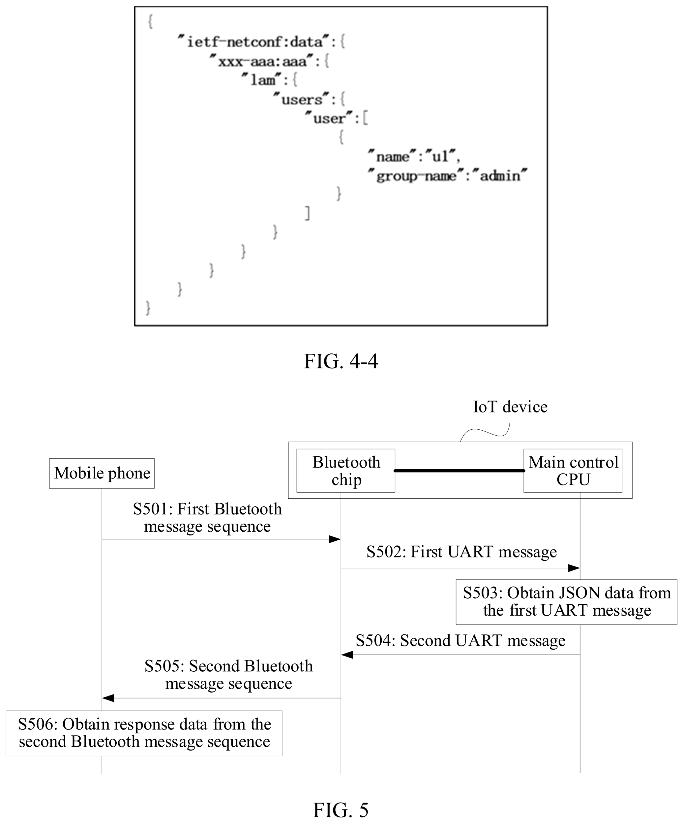

Optionally, the IoT device and the smart terminal may predefine a target modeling language, and the user data may be data obtained through modeling description by using the target modeling language. For example, the target modeling language is used for a complete description of data between the client and the serving end that support the NETCONF protocol. Optionally, the target modeling language is a next generation modeling language YANG model or a thing model. FIG. 4-1 schematically shows a YANG model in an IoT device or a smart terminal. FIG. 4-2 to and FIG. 4-4 each schematically show user data output by the YANG model. When the user data is used for configuring the IoT device, for the user data output by the YANG model of the smart terminal, refer to FIG. 4-2 for understanding. When the user data is used for querying data in the IoT device, for the user data output by the YANG model of the smart terminal, refer to FIG. 4-3 for understanding. When the user data is an internet of things interrupt response, for the user data output by the YANG model of the IoT device, refer to FIG. 4-4 for understanding.

A BLE chip has an advantage of low power consumption, but a maximum payload size of a BLE message is generally small. For example, the maximum payload size is 244 bytes (Bytes). However, data output by the target modeling language is generally a large file, for example, a Javascript object notation (JavaScript Object Notation, JSON) file (also referred to as JSON data) or an extensible markup language (extensible markup language, XML) file (also referred to as XML data), whose size is far greater than the maximum payload size of the BLE message.

To facilitate reception of first data sent by the smart terminal by the Bluetooth chip, after obtaining first encrypted data through encryption, the smart terminal may fragment the first encrypted data to obtain a plurality of first data blocks and separately send the plurality of first data blocks through the Bluetooth connection. Correspondingly, that the main control CPU receives, through the encrypted data channel, the first data sent by the smart terminal may include: The main control CPU separately receives, by using the Bluetooth chip, the plurality of first data blocks sent by the smart terminal; assembles the plurality of first data blocks to obtain the first encrypted data; and decrypts the first encrypted data by using a session key of the encrypted data channel, to obtain the first data.

To facilitate sending of the second data to the smart terminal by the Bluetooth chip, sending the second data to the smart terminal through the encrypted data channel includes: encrypting the second data by using the session key of the encrypted data channel, to obtain second encrypted data; fragmenting the second encrypted data to obtain a plurality of second data blocks; and separately sending the plurality of second data blocks by using the Bluetooth chip. Correspondingly, the smart terminal may separately receive the plurality of second data blocks through the Bluetooth connection; assemble the plurality of second data blocks to obtain the second encrypted data; and decrypt the second encrypted data by using the session key of the encrypted data channel, to obtain the second data.

In some examples, flow data (for example, UART data) is communicated between the main control CPU and the Bluetooth chip through the serial port. Because the Bluetooth chip cannot control a time interval at which the plurality of first data blocks arrive at the Bluetooth chip, to optimize transmission performance (for example, reduce a transmission delay) between the Bluetooth chip and the main control CPU, the Bluetooth chip may continuously send the plurality of first data blocks through the serial port. In this case, first flow data received by the main control CPU through the serial port may include flow data corresponding to the plurality of first data blocks. The main control CPU may disassemble the first flow data into the plurality of first data blocks, and then assemble the plurality of first data blocks to obtain the first encrypted data, and decrypt the first encrypted data by using the session key of the encrypted data channel, to obtain the first data.

To facilitate disassembling the first flow data by the main control CPU to obtain the plurality of first data blocks, the Bluetooth chip may add, to the first data block, a frame header (referred to as a frame header of framing) indicating the main control CPU to determine a corresponding data block from the first flow data, and the main control CPU may disassemble the first flow data based on the frame header of the framing of the first data block, to obtain the plurality of first data blocks.

Optionally, if the main control CPU sends the plurality of second data blocks to the Bluetooth chip through the serial port, to optimize transmission performance (for example, reduce a transmission delay) between the Bluetooth chip and the main control CPU, the main control CPU may combine the plurality of second data blocks into second flow data, and send the second flow data to the Bluetooth chip through the serial port.

To facilitate disassembling the second flow data by the Bluetooth chip to obtain the plurality of second data blocks, the main control CPU may add, to the second data block, a frame header (referred to as a frame header of framing) indicating the Bluetooth chip to determine a corresponding data block from the second flow data, and the main control CPU may disassemble the second flow data based on the frame header of the framing of the second data block, to obtain the plurality of second data blocks.

FIG. 5 schematically shows, by using an example in which a smart terminal is a mobile phone, and a bold line segment represents a UART serial port connection line, a possible process of communicating user data between the smart terminal and a main control CPU in an encrypted data channel. With reference to FIG. 5, the process of communicating the user data may include steps S501 to S506.

S501: The mobile phone sends a first Bluetooth message sequence to a Bluetooth chip.

A user may input an operations and maintenance instruction on a second interface of the mobile phone, and the mobile phone may convert, by using a YANG model, the operations and maintenance instruction into model-based descriptive data. For example, the data is JSON data. Optionally, the JSON data may include a first acknowledgment header. The mobile phone encrypts the JSON data by using a session key, to obtain first encrypted data, and then encapsulates a DTLS header into the first encrypted data to obtain first DTLS data.

The mobile phone may fragment the first DTLS data to obtain m fragments, where m is a positive integer. An example in which a length of the first DTLS data is 1200 bytes, the mobile phone fragments the first DTLS data to obtain ten fragments, and a length of each fragment is 120 bytes is used below.

The mobile phone may add a fragment header to each fragment to obtain ten pieces of fragment information. The fragment header includes, for example, a 2-byte "length" field, a 2-byte "ID" field, and a 2-byte fragment information field. "Length" indicates a length of the first DTLS data, and "ID" is used for identifying a fragment and indicates a receive end to restore the ten fragments to the first DTLS data. The fragment information may indicate whether the fragment is a last fragment and/or an offset.

The mobile phone adds a Bluetooth message header to each piece of fragment information to obtain ten Bluetooth messages that are referred to as the first Bluetooth message sequence. The Bluetooth message is, for example, a GATT message.

S502: The Bluetooth chip sends a first UART message to the main control CPU through a UART serial port.

After receiving the first Bluetooth message sequence, the Bluetooth chip may extract a payload (that is, the fragment information) in each Bluetooth message, and add a UART frame header (that is, a frame header of framing) to each payload, to obtain the first UART message.

The UART frame header may include, for example, a 3-byte "SYN" field, a 1-byte "START" field, a 2-byte "PKTLEN" field, a "DATA" field, a 2-byte "CRC" field, and a 1-byte "END" field. "DATA" indicates the payload, "SYN" indicates a synchronization identifier, "START" indicates a start identifier, "PKTLEN" indicates a length of "DATA", "CRC" indicates a "CRC" value (that is, a check value) of "DATA", and "END" indicates an end identifier.

S503: The main control CPU obtains JSON data from the first UART message.

The first UART message is flow data. The main control CPU may obtain the ten pieces of fragment information by disassembling the first UART message, and restore the ten fragments to the first DTLS data based on the fragment headers. Then, the main control CPU may remove the DTLS header of the first DTLS data to obtain the first encrypted data, and decrypt the first encrypted data by using the session key, to obtain the JSON data.

S504: The main control CPU sends a second UART message to the Bluetooth chip through the UART serial port. The main control CPU may parse the JSON data into an understandable data format and respond to obtain response data. Optionally, a second acknowledgment header matching the first acknowledgment header may be encapsulated into the response data.

The main control CPU may encrypt the response data by using the session key, to obtain second encrypted data, and then encapsulate a DTLS header into the second encrypted data to obtain second DTLS data.

The main control CPU may fragment the second DTLS data to obtain n fragments, where n is a positive integer. The main control CPU may add a fragment header to each fragment to obtain n pieces of fragment information.

The main control CPU may add a UART frame header (that is, the frame header of the framing) to each piece of fragment information to obtain the second UART message, and send the second UART message to the Bluetooth chip through the UART serial port.

S505: The Bluetooth chip sends a second Bluetooth message sequence to the mobile phone.

The second UART message is flow data. The Bluetooth chip may obtain the n pieces of fragment information by disassembling the second UART message, and add a Bluetooth message header to each piece of fragment information to obtain n Bluetooth messages that are referred to as the second Bluetooth message sequence. The Bluetooth message is, for example, a GATT message.

S506: The mobile phone obtains response data from the second Bluetooth message sequence.

After receiving the second Bluetooth message sequence, the mobile phone may extract a payload (that is, the fragment information) in each Bluetooth message, and restore the n fragments to the second DTLS data based on the fragment headers. Then, the mobile phone may remove the DTLS header of the second DTLS data to obtain the second encrypted data, and decrypt the second encrypted data by using the session key, to obtain the response data. Then, optionally, the mobile phone may parse response content and display the response content on a mobile phone interface. Currently, a DTLS protocol and the Bluetooth chip do not have a retransmission mechanism. To improve reliability of data communicated through the communication channel, message retransmission may be supported, to ensure reliable transmission of the message. The messages may be selected for retransmission based on importance/performance. Optionally, to improve reliability of the first data and the second data communicated through the encrypted data channel, after sending the second data to the smart terminal through the encrypted data channel, the method further includes: repeatedly sending the second data to the smart terminal through the encrypted data channel. For example, still with reference to FIG. 5, after S501, the mobile phone may start a timer. Before the timer expires, if the mobile phone does not receive the response data encapsulated with the second acknowledgment header, the mobile phone may retransmit the first Bluetooth message sequence to the Bluetooth chip.

The foregoing describes the method provided in this application, and the following describes an apparatus provided in this application.

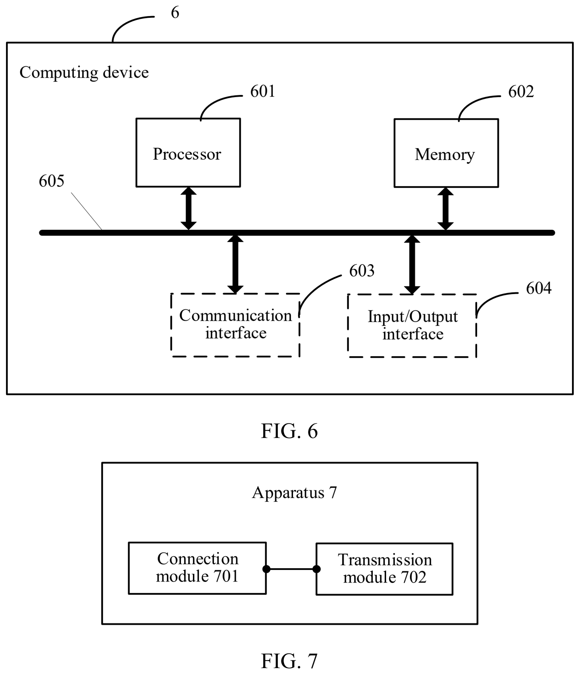

This application provides a computing device. FIG. 6 is a diagram of a possible structure of a computing device. With reference to FIG. 6, the computing device 6 includes a processor 601 and a memory 602.

The processor 601 may be one or more CPUs, and the CPU may be a single-core CPU, or may be a multi-core CPU. The memory 602 includes but is not limited to a random access memory (random access memory, RAM), a read-only memory (read-only memory, ROM), an erasable programmable read-only memory (erasable programmable read-only memory, EPROM, or a flash memory), a flash memory, an optical memory, or the like. The memory 602 stores program code, or computer-readable program code, or code of an operating system and program code, or computer program code, or a function program. Optionally, the memory 602 may be a non-volatile memory or a volatile memory. In a possible implementation, the computing device 6 further includes a communication interface 603. The communication interface 603 may be a wired interface, for example, a fiber distributed data interface (fiber distributed data interface, FDDI), a gigabit ethernet (gigabit ethernet, GE) interface, or the serial port described above. The communication interface 603 may alternatively be a wireless interface.

In a possible implementation, the computing device 6 further includes an input/output interface 604. The input/output interface 604 is configured to connect to an input/output device. The input/output interface 604 is connected to the input/output device, to obtain input information from a user or output information to the user through the input/output device. The information may be a voice, an image, or the like. The output device includes but is not limited to at least one of a keyboard, a display, a speaker, and the like.

Optionally, the computing device 6 further includes a bus 605. The processor 601, the memory 602, the communication interface 603, and the input/output interface 604 may be connected to each other through the bus 605, or may be connected to each other in another manner.

The computing device 6 may be the first terminal device, the second terminal device, or the apparatus in the second terminal device described above. The processor 601 reads and executes the program code stored in the memory 602, to enable the computing device 6 to perform the method performed by the corresponding device or apparatus in the foregoing method example. The processor 601 reads and executes the stored program code, to enable the computing device 6 to perform the foregoing steps. For more details, refer to corresponding descriptions in the foregoing method examples. Details are not described herein again.

Optionally, the program code is stored in a memory outside the computing device. When the program code is decoded and executed by the processor 601 of the computing device 6, the memory 602 inside the computing device 6 temporarily stores a part or all of content of the program code. Optionally, a part of the content of the program code is stored in a memory outside the computing device 6, and another part of content of the program code is stored in the memory 602 inside the computing device 6.

This application further provides a chip, also referred to as a chip system. The chip includes a processor and an interface circuit. The processor is configured to be coupled to a memory through the interface circuit. The chip may be the apparatus or the Bluetooth chip in the second terminal device described above. The processor is configured to run the instructions stored in the memory, to implement the method performed by the corresponding apparatus or chip in any one of the foregoing method examples in this application.

In an example, the processor may execute program code stored in the memory, to enable the chip to perform any one of the foregoing method examples. Optionally, the memory may be a storage unit inside the chip system, for example, a register or a cache, or the memory may be a memory that is inside a computing device and that is located outside the chip system, for example, a read-only memory (read-only memory, ROM), another type of static storage device that can store static information and program code, or a random access memory (random access memory, RAM). Optionally, the memory may be a non-volatile memory or a volatile memory. Optionally, the processor may be a general-purpose central processing unit (CPU), a microprocessor, an application-specific integrated circuit (application-specific integrated circuit, ASIC), or one or more integrated circuits configured to control program execution of any one of the foregoing method examples.

This application provides an apparatus. FIG. 7 is a diagram of a possible structure of an apparatus 7 according to this application. With reference to FIG. 7, the apparatus 7 includes a connection module 701 and a transmission module 702.

The apparatus may be an apparatus or a main control CPU in the second terminal device mentioned in the method in this application. The connection module 701 is configured to perform steps S201 and S202 in the example shown in FIG. 2. The transmission module 702 is configured to perform step S203 in the example shown in FIG. 1. Alternatively, the connection module 701 is configured to perform the steps performed by the main control CPU in the example shown in FIG. 3. Alternatively, the transmission module 702 is configured to perform the steps performed by the main control CPU in the example shown in FIG. 5.

The apparatus may be the first terminal device or the mobile phone mentioned in the method in this application. The connection module 701 is configured to perform steps S201 and S202 in the example shown in FIG. 2. The transmission module 702 is configured to perform step S203 in the example shown in FIG. 1. Alternatively, the connection module 701 is configured to perform the steps performed by the mobile phone in the example shown in FIG. 3. Alternatively, the transmission module 702 is configured to perform the steps performed by the mobile phone in the example shown in FIG. 5.

The module division of the apparatus 7 described in FIG. 7 is merely an example, and is merely logical function division. In an actual implementation, there may be another division manner. For example, a plurality of modules or components may be combined or integrated into another system, or some features may be ignored or not performed. Functional modules in apparatus may be integrated into one processing module, or each of the modules may exist alone physically, or two or more modules may be integrated into one module.

The modules in FIG. 7 may be implemented in a form of hardware, or may be implemented in a form of a software functional unit. For example, when software is used for implementation, each module in FIG. 7 may be implemented by a software functional module generated by the processor 601 in FIG. 6 after the processor 601 reads the program code stored in the memory 602. The modules in FIG. 7 may alternatively be separately implemented by different hardware in FIG. 6, or may be implemented by using a combination of software and hardware.

A connection in the examples of this application is a coupling or a communication connection between apparatuses, units, or modules, and is used for information exchange between the apparatuses, the units, or the modules.

A person of ordinary skill in the art may understand that when software is used to implement the aspects of the examples of this application or the possible implementations of the aspects, all or some of the foregoing aspects or the possible implementations of the aspects may be implemented in a form of a computer program product. The computer program product refers to program code (or computer-readable program code or computer program code or a functional program or program code) stored in a computer-readable medium. When the program code is loaded and executed on a computer, the procedures or functions according to examples of this application are all or partially generated.

The computer-readable medium may be a computer-readable signal medium or a computer-readable storage medium. The computer-readable storage medium includes but is not limited to an electronic, magnetic, optical, electromagnetic, infrared, or semiconductor system, device, or apparatus, or any appropriate combination thereof. For example, the computer-readable storage medium is a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

In the specification, the claims, and the accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in examples of this application. In addition, the terms "include", "contain" and any other variants mean to cover a non-exclusive inclusion, so that a process, a method, a system, a product, or a device that includes a series of units is not necessarily limited to those units, but may include other units not expressly listed or inherent to such a process, method, product, or device. In examples of this application, the term "a plurality of" means two or more.

It is clear that a person skilled in the art can make various modifications and variations to the present invention without departing from the scope of the present invention. In this way, the present invention is intended to cover these modifications and variations of this application provided that they fall within the scope of protection of the claims of the present invention.

## Claims

1. An internet of things communication method, comprising:
establishing a Bluetooth connection with a terminal device by using a Bluetooth chip;
establishing a datagram transport layer security DTLS protocol-based encrypted data channel with the terminal device based on the Bluetooth connection; and
communicating data with the terminal device through the encrypted data channel.

2. The method according to claim 1, wherein the establishing the datagram transport layer security DTLS protocol-based encrypted data channel with the terminal device based on the Bluetooth connection comprises:
negotiating configuration information of a pre-shared key PSK with the terminal device based on the Bluetooth connection; and
negotiating a session key of the encrypted data channel with the terminal device based on the configuration information of the PSK.

3. The method according to claim 2, wherein the negotiating the configuration information of the PSK with the terminal device based on the Bluetooth connection comprises:
receiving and storing the configuration information from the terminal device through the Bluetooth connection, wherein the configuration information is obtained by the terminal device from a user.

4. The method according to claim 3, wherein the method further comprises:
controlling, based on that the configuration information is not stored, the Bluetooth chip to transmit a Bluetooth signal at a first transmit power; and
controlling, based on that the configuration information is stored, the Bluetooth chip to transmit a Bluetooth signal at a second transmit power, wherein the first transmit power is less than the second transmit power.

5. The method according to any one of claims 1 to 4, wherein the data is data obtained through description by using a next generation modeling language YANG model or a thing model.

6. The method according to any one of claims 1 to 5, wherein the communicating the data with the terminal device through the encrypted data channel comprises:
receiving first flow data from the Bluetooth chip through a serial port, wherein the first flow data is sent by the Bluetooth chip to the serial port upon reception of a plurality of first data blocks sent by the terminal device;
disassembling the first flow data into the plurality of first data blocks;
assembling the plurality of first data blocks to obtain first encrypted data; and
decrypting the first encrypted data by using the session key of the encrypted data channel, to obtain the data.

7. The method according to any one of claims 1 to 6, wherein the communicating the data with the terminal device through the encrypted data channel comprises:
encrypting the data by using the session key of the encrypted data channel, to obtain second encrypted data;
fragmenting the second encrypted data to obtain a plurality of second data blocks;
combining the plurality of second data blocks into second flow data; and
sending the second flow data to the Bluetooth chip through the serial port.

8. The method according to any one of claims 1 to 7, wherein the internet of things communication method is applied to an apparatus in an internet of things device, the apparatus and the Bluetooth chip are deployed in the internet of things IoT device, and the apparatus is connected to the Bluetooth chip.

9. An internet of things communication method, applied to an internet of things system, wherein the internet of things system comprises a first terminal device and a second terminal device, the second terminal device comprises an apparatus and a Bluetooth chip, the apparatus is connected to the Bluetooth chip, and the method comprises:
establishing, by the apparatus, a Bluetooth connection with the first terminal device by using the Bluetooth chip;
establishing, by the apparatus, a datagram transport layer security DTLS protocol-based encrypted data channel with the first terminal device based on the Bluetooth connection; and
communicating, by the first terminal device, data with the apparatus through the encrypted data channel.

10. An apparatus, wherein the apparatus comprises a connection module and a transmission module;
the connection module is configured to establish a Bluetooth connection with a terminal device by using a Bluetooth chip;
the connection module is further configured to establish a datagram transport layer security DTLS protocol-based encrypted data channel with the terminal device based on the Bluetooth connection; and
the transmission module is configured to communicate data with the terminal device through the encrypted data channel.

11. An apparatus, comprising a processor and a memory, wherein when running instructions stored in the memory, the processor performs the method according to any one of claims 1 to 8.

12. The apparatus according to claim 11, wherein the apparatus is a chip.

13. A device, wherein the device comprises a Bluetooth chip and the apparatus according to claim 10, 11, or 12, and the Bluetooth chip is connected to the apparatus.

14. An internet of things system, comprising one or more terminal devices and one or more devices according to claim 13.
